(19) Europäisches Patentamt

European Patent Office

Office européen des brevets

(11) **EP 0 603 051 B1**

(12) **FASCICULE DE BREVET EUROPEEN**

(45) Date de publication et mention
de la délivrance du brevet:
**08.07.1998 Bulletin 1998/28**

(51) Int Cl.6: **H02M 3/156**

(21) Numéro de dépôt: **93403007.3**

(22) Date de dépôt: **13.12.1993**

(54) **Dispositif de pilotage de hacheur**

Gleichstromzerhackersteuerschaltung

Chopper driving device

(84) Etats contractants désignés:
**AT BE CH DE ES FR GB IT LI NL SE**

(30) Priorité: **15.12.1992 FR 9215081**

(43) Date de publication de la demande:
**22.06.1994 Bulletin 1994/25**

(73) Titulaire: **GEC ALSTHOM TRANSPORT SA**
**75016 Paris (FR)**

(72) Inventeur: **Bavard, Jean**
**F-69009 Lyon (FR)**

(74) Mandataire: **El Manouni, Josiane et al**
**ALCATEL ALSTHOM,**
**Département de Propriété Industrielle,**
**30, avenue Kléber**
**75116 Paris (FR)**

(56) Documents cités:
**DE-A- 3 619 256      GB-A- 2 134 291**

## Description

La présente invention concerne un dispositif de pilotage de hacheur.

On rappelle qu'un hacheur est un dispositif alimenté par une grandeur d'entrée (tension ou courant) continue, et comportant au moins un composant interrupteur de puissance commandé à l'ouverture et à la fermeture en vue de fixer la valeur moyenne d'une grandeur de sortie (courant ou tension) de ce dispositif, la durée de conduction dudit composant interrupteur étant définie par la largeur de créneaux de commande qui lui sont appliqués, et le rythme de ces créneaux fixant le rythme de fonctionnement du hacheur.

On rappelle en outre que le pilotage d'un hacheur nécessite d'effectuer les opérations suivantes :

- mesure de la valeur moyenne de la grandeur de sortie du hacheur,
- calcul de régulation destiné à déterminer la largeur des créneaux de commande à appliquer audit interrupteur, de façon à rendre ladite valeur moyenne égale à une grandeur de consigne déterminée.

Ces opérations de mesure de valeur moyenne et de calcul de régulation sont généralement effectuées à la fréquence de fonctionnement du hacheur, et la génération desdits créneaux de commande est en outre généralement obtenue en fixant l'un des instants de commande (d'ouverture ou de fermeture) dudit interrupteur, l'autre instant étant commandé en fonction des résultats dudit calcul de regulation.

Un problème se pose pour effectuer la mesure de la valeur moyenne de la grandeur de sortie du hacheur, qui consiste à éliminer de cette grandeur de sortie les harmoniques dus au découpage. Ce problème est généralement résolu en effectuant un filtrage, qui peut lui-même être réalisé en numérique ou en analogique.

Un tel filtrage a essentiellement pour inconvénient d'entraîner un temps relativement long d'acquisition de cette valeur moyenne (qui, ajouté au temps de calcul de régulation, fait que le résultat de ce calcul est généralement appliqué avec une période de retard), ainsi que, suivant que ce filtrage est réalisé en analogique ou en numérique, d'être complexe à mettre en oeuvre ou d'entraîner une limitation de la bande passante (du fait de l'opération de filtrage préalable elle-même nécessaire en vue d'éviter le phénomène de repliement de spectre par l'échantillonnage de la grandeur de sortie, lui-même dû au traitement numérique de celle-ci).

Le document GB 2 134 291 décrit un dispositif de pilotage de hacheur conforme au préambule de la revendication 1.

La présente invention a essentiellement pour but d'éviter les inconvénients précités.

La présente invention a pour objet un dispositif de pilotage de hacheur, comportant:

- des moyens de mesure de la valeur moyenne d'une grandeur de sortie dudit hacheur,
- des moyens de régulation qui commandent la fourniture de créneaux de commande du hacheur à partir de résultats de mesure fournis par lesdits moyens de mesure et d'une grandeur de consigne, de façon à rendre ladite valeur moyenne égale à ladite grandeur de consigne,
- des moyens pour générer un signal d'échantillonnage présentant des impulsions dont la position relative est déterminée de façon à ce que lesdites impulsions coïncident avec le passage de ladite grandeur de sortie par sa valeur moyenne,

ledit dispositif étant caractérisé en ce que:

- lesdits moyens de mesure comportent lesdits moyens pour générer ledit signal d'échantillonnage et des moyens pour échantillonner ladite grandeur de sortie par ledit signal d'échantillonnage, et en ce que
- la détermination de la position relative desdites impulsions dudit signal d'échantillonnage, de façon à ce que lesdites impulsions coïncident avec le milieu desdits créneaux de commande dudit hacheur.

D'autres objets et caractéristiques de la présente invention apparaîtront à la lecture de la description suivante d'exemples de réalisation, faite en relation avec les dessins ci-annexés, dans lequel :

- la figure 1 est un schéma synoptique d'un exemple de réalisation d'un dispositif de pilotage de hacheur suivant l'invention,
- les figures 2 à 5 sont des diagrammes illustrant divers exemples de fonctionnement d'un dispositif de pilotage suivant l'invention.

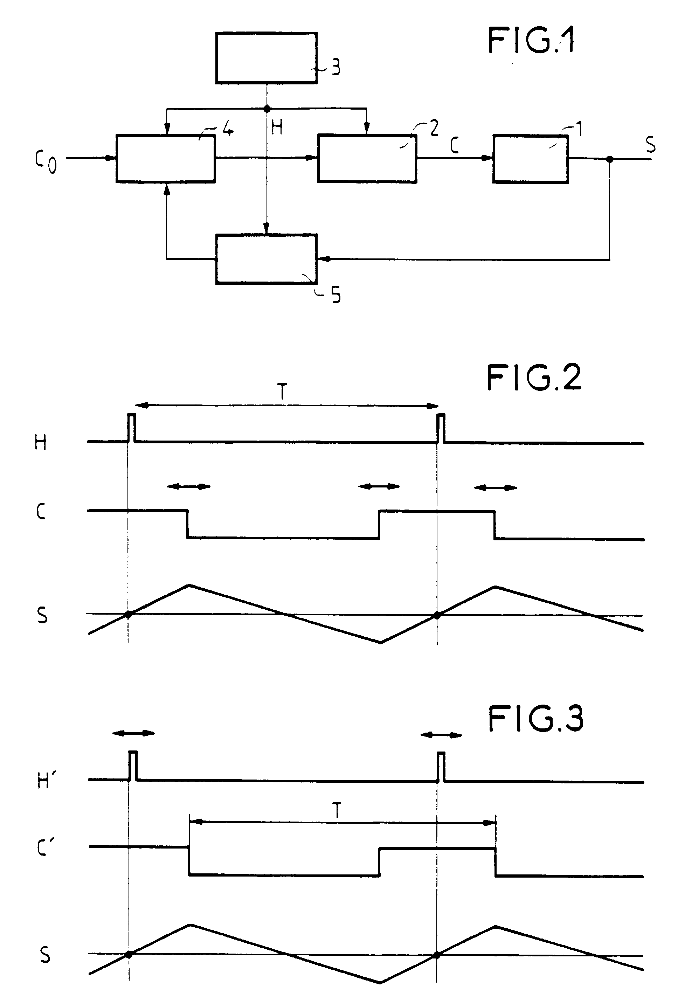

On a représenté sur la figure 1 un hacheur, 1, commandé par un générateur de créneaux de commande, 2, recevant lui-même d'une part un signal d'horloge, H, issu d'une horloge, 3, dont la période, T, fixe la période de fonctionnement de ce hacheur, et d'autre part un signal de commande issu de moyens de régulation, 4, qui opèrent eux-mêmes, de façon connue et non rappelée ici, à partir d'une grandeur de consigne, Co, et de résultats fournis par des moyens, 5, de mesure de la valeur moyenne de la grandeur de sortie, S, du hacheur 1, de façon à rendre ladite valeur moyenne égale à ladite grandeur de consigne.

Suivant l'invention, lesdits moyens de mesure 5 consistent en un simple échantillonneur destiné à échantillonner la grandeur de sortie S par un signal d'échantillonnage présentant des impulsions dont la position relative, par rapport auxdits créneaux de commande, est déterminée de façon à ce que ces impulsions coïncident avec le passage de la grandeur de sortie du hacheur par sa valeur moyenne.

A titre d'exemple, dans le cas d'une grandeur de sortie obtenue dans un système dit du premier ordre, c'est-à-dire composé uniquement soit d'une résistance et d'une inductance (la grandeur de sortie étant alors constituée par le courant dans cette inductance), soit d'une résistance et d'un condensateur, (la grandeur de sortie étant alors constituée par la tension aux bornes de ce condensateur), la position relative desdits créneaux de commande et desdites impulsions d'échantillonnage sera déterminée de façon à ce que ces impulsions coïncident avec le milieu desdits créneaux de commande.

Dans l'exemple de réalisation illustré sur la figure 1, ledit signal d'échantillonnage est constitué par le signal d'horloge H de période T fixant la période de fonctionnement du hacheur.

Le fonctionnement du dispositif de la figure 1 est illustré sur le chronogramme de la figure 2. Comme illustré sur cette figure, les créneaux de commande, C, (représentés à la deuxième ligne de ce chronogramme) ont leur position commandée, par rapport à celle, fixe, des impulsions de l'horloge d'échantillonnage H (représentée à la première ligne de ce chronogramme), de manière à ce que ces impulsions d'échantillonnage coïncident avec le passage de la grandeur de sortie S (représentée à la troisième ligne de ce chronogramme) par sa valeur moyenne, soit, la grandeur de sortie étant ici supposée du premier ordre, avec le milieu des créneaux de commande.

Dans l'exemple de fonctionnement illustré sur le chronogramme de la figure 3, ce sont au contraire les impulsions du signal d'échantillonnage, noté alors H', qui ont leur position commandée par rapport à celle, fixe, de l'un des fronts (montant ou descendant) des créneaux de commande, notés C', c'est-à-dire de l'un des instants de commande (à l'ouverture ou à la fermeture) dudit interrupteur de puissance, de façon à ce que ces impulsions d'échantillonnage coïncident de même avec le passage de la grandeur de sortie S par sa valeur moyenne, soit, la grandeur de sortie étant également ici supposée du premier ordre, avec le milieu des créneaux de commande.

On notera que l'exemple de fonctionnement illustré sur la figure 2 nécessite une commande adéquate du générateur de créneaux de commande 2, par les moyens de régulation 4, alors que l'exemple de fonctionnement illustré sur la figure 3 nécessiterait une commande adéquate d'un générateur d'impulsions d'échantillonnage par les moyens de régulation 4.

Dans l'exemple de fonctionnement de la figure 2, ladite commande adéquate consistera, une fois la largeur des créneaux de commande déterminée, (de façon classique) par calcul de régulation, en une commande de positionnement des fronts montants et descendants de ces créneaux de commande par rapport aux impulsions de l'horloge d'échantillonnage reçue par ailleurs par lesdits moyens de régulation, de façon à respecter ladite largeur.

Dans l'exemple de fonctionnement de la figure 3, ladite commande adéquate consistera, une fois la largeur des créneaux de commande déterminée, (de façon classique) par calcul de régulation, en une commande de positionnement des impulsions du signal d'échantillonnage par rapport à l'un des fronts (montants ou descendants) desdits créneaux de commande, le rythme de ce front étant lui-même fixé par un signal d'horloge de période T reçu par ailleurs par lesdits moyens de régulation, de façon à respecter ladite largeur.

Comme la grandeur de sortie S passe deux fois par période de fonctionnement du hacheur par sa valeur moyenne, l'invention permet en outre avantageusement d'effectuer lesdites opérations de mesure et de calcul de régulation à une fréquence double de la fréquence de fonctionnement du hacheur (et non simplement, comme illustré sur les figures 2 et 3, à la fréquence de fonctionnement de ce hacheur) et donc d'obtenir de meilleures performances pour ledit pilotage en termes de bande passante et de rapidité de réaction vis-à-vis des perturbations.

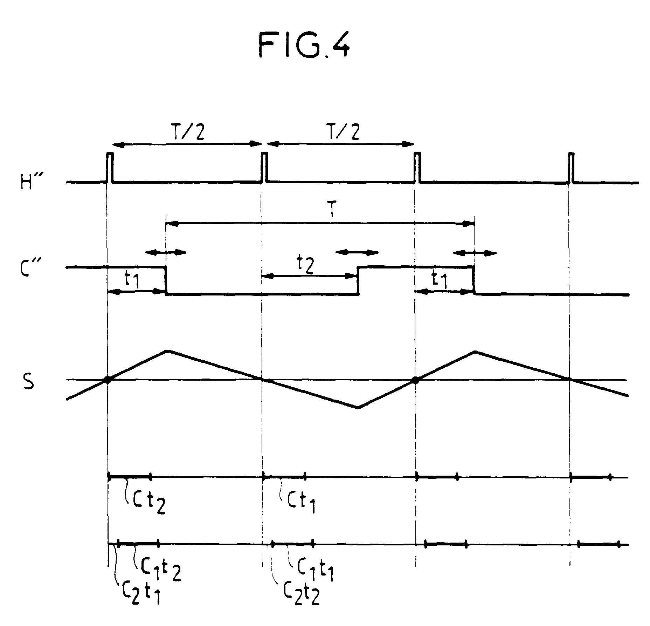

Une telle variante est illustrée sur la figure 4 où l'on a considéré un signal d'échantillonnage, noté H'', présentant en l'occurence des impulsions de position fixe, et à une fréquence double de celle du signal d'horloge H. Pour commander en l'occurence la position des créneaux de commande, notés C'', par rapport auxdites impulsions d'échantillonnage, on agit alors alternativement, par une commande adéquate du générateur de créneaux de commande par les moyens de régulation, sur la position, repérée $t_2$, du front montant d'un créneau, par rapport à l'instant d'échantillonnage précédant immédiatement ce front, et sur la position, repérée $t_1$, du front descendant de ce créneau par rapport à l'instant d'échantillonnage suivant.

Ladite commande adéquate consistera, une fois la largeur des créneaux de commande déterminée (de façon classique) par calcul de régulation, en une commande de positionnement des fronts montants et descendants desdits créneaux de commande, par rapport aux impulsions du signal d'horloge d'échantillonnage H'' reçu par ailleurs par lesdits moyens de régulation, de façon à respecter ladite largeur.

En calculant la prochaine valeur du paramètre $t_2$ à appliquer, tandis que l'on applique la valeur en cours du paramètre $t_1$, et réciproquement, (comme illustré à l'avant-dernière ligne du chronogramme de la figure 4 où l'on a reperé $Ct_1$ et $Ct_2$ les cycles de calcul des paramètres $t_1$ et $t_2$, respectivement ) on réduit en outre le retard à l'application des valeurs obtenues à l'issue du calcul de régulation, ce qui permet d'obtenir encore de meilleures performances pour le dispositif de pilotage, en termes de bande passante et de rapidité de réaction vis-à-vis des perturbations.

L'ensemble du calcul de la valeur $t_1$ ou $t_2$ est, avec les microprocesseurs d'usage courant, plus long que la moitié de la valeur minimale d'un créneau de commande du hacheur. Ce calcul consiste dans le calcul d'un polynôme s'exprimant sous la forme :

$$s(n) = C_o \ e(n) + C_1 \ e(n-1) + C_2 \ e(n-2) + ... + C_k s \ (n-1)$$

où $C_o$, $C_1$, $C_2$, $C_k$ désignent des coefficients déterminés, $e(n)$ désigne le dernier résultat de mesure obtenu, $e(n-1)$, $e(n-1)$... etc désignent les résultats de mesure obtenus précédemment, et $s(n-1)$ désigne la valeur précédente obtenue par calcul d'un tel polynôme.

Il est possible de réduire encore le retard à l'application des valeurs obtenues à l'issue des calculs de régulation, en limitant le calcul de régulation effectué à la suite d'une mesure, au calcul de celui des termes de ce polynôme qui nécessite la prise en compte du résultat de cette mesure, et en effectuant le calcul des autres termes de ce polynôme de façon anticipée.

Il devient en effet alors possible d'appliquer immédiatement, c'est-à-dire pour le cycle mesure-calcul de régulation considéré, la valeur, $t_1$, ou $t_2$, issue du calcul de régulation.

Une telle variante est illustrée à la dernière ligne du chronogramme de la figure 4, où l'on a ainsi repéré $C_1 t_1$ et $C_1 t_2$, respectivement, la partie anticipée de calcul des paramètres $t_1$ et $t_2$, et $C2t1$ et $C2t2$, respectivement, la partie non anticipée du calcul de ces paramètres.

On notera qu'une telle application immédiate ne serait pas envisageable dans les systèmes de pilotage antérieurs compte tenu du fait que le cumul des temps de calcul consacrés d'une part au filtrage (permettant lui-même, comme rappelé plus haut, d'effectuer ladite mesure de valeur moyenne), et d'autre part à la régulation, entraîne nécessairement, dans ces systèmes, une application avec une période de retard.

Bien que les exemples de fonctionnement décrits dans ce qui précède correspondent plus particulièrement au cas où la grandeur de sortie est obtenue dans un système dit du premier ordre, la présente invention n'est pas limitée au cas d'un système du premier ordre, mais est applicable aussi à des systèmes d'ordre plus élevé.

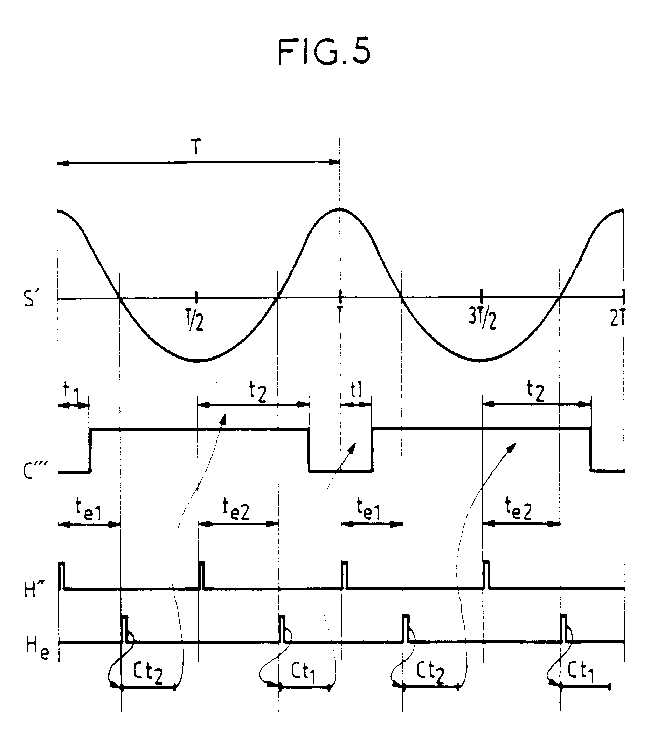

Le cas d'un système dit du second ordre, (c'est-à-dire comportant l'ensemble des composants résistance, inductance et condensateur) est illustré à la figure 5 qui correspond, à titre d'exemple, comme la figure 4, à un fonctionnement dit "à fréquence double", et où l'on a noté respectivement C''' C'' et S' les formes d'onde notées et S sur la figure 4, et He le signal d'échantillonnage de la grandeur de sortie.

Dans le cas d'un système du second ordre, la grandeur de sortie est égale à sa valeur moyenne à des instants repérés $te_1$ et $te_2$ (avec $te_2 = T/2 - te_1$), les valeurs $te_1$ et $te_2$ évoluant en fonction du rapport cyclique selon une loi de variation déterminée. Les instants d'échantillonnage peuvent alors être calculés à l'avance, d'après ladite loi, et stockés en mémoire. Il est aussi possible de les calculer en temps réel selon une loi approchée de type polynome du second degré ou trigonométrique.

Le calcul de régulation pourra, comme expliqué dans le cas de la figure 4, être effectué à la suite de la mesure de la grandeur, et son résultat ($t_1$ ou $t_2$) être appliqué dans la demi-période suivante.

Plus généralement, dans le cas de systèmes d'ordre "n" impair, (avec n entier supérieur à 1) les principes décrits plus haut pour le cas d'un système du premier ordre pourront être appliqués.

Pour le cas de systèmes d'ordre "n" pair (avec n entier supérieur à 2) on utilisera les principes décrits ci-dessus pour un système du second ordre, mais on pourra, en pratique, prendre des instants d'échantillonnage $te_1$ et $te_2$ situés T/4 par rapport au milieu des créneaux de commande du hacheur, car les instants d'échantillonnage idéaux en sont très proches, donc l'erreur est négligeable.

On notera par ailleurs que la présente invention est également applicable à un hacheur dit équivalent résultant de l'entrelacement de plusieurs hacheurs, un tel entrelacement permettant, de façon connue et non rappelée ici, d'obtenir, pour ce hacheur équivalent, une fréquence de fonctionnement égale à "m" fois la fréquence de fonctionnement d'un seul de ces hacheurs entrelacés, où "m" désigne le nombre de ces hacheurs.

**Revendications**

1. Dispositif de pilotage de hacheur, comportant:

    - des moyens de mesure de la valeur moyenne d'une grandeur de sortie (S) dudit hacheur (1),
    - des moyens de régulation (4) qui commandent la fourniture de créneaux de commande du hacheur à partir de résultats de mesure fournis par lesdits moyens de mesure et d'une grandeur de consigne (Co), de façon à rendre ladite valeur moyenne égale à ladite grandeur de consigne,
    - des moyens (3) pour générer un signal d'échantillonnage (H) présentant des impulsions dont la position relative est déterminée de façon à ce que lesdites impulsions coïncident avec le passage de ladite grandeur de sortie par sa valeur moyenne,

    ledit dispositif étant caractérisé en ce que:

    - lesdits moyens de mesure comportent lesdits moyens (3) pour générer ledit signal d'échantillonnage et des moyens (5) pour échantillonner ladite grandeur de sortie par ledit signal d'échantillonnage (H), et en ce que
    - la détermination de la position relative desdites impulsions dudit signal d'échantillonnage (H) est effectuée de façon à ce que lesdites impulsions coïncident avec le milieu desdits créneaux de commande dudit hacheur.

2. Dispositif selon la revendication 1, caractérisé en ce que lesdits moyens (3) génère un signal d'échantillonnage (H) dont les impulsions ont une position fixe et en ce qu'il comporte des moyens pour commander la position desdits créneaux de commande (C) par rapport à celle desdites impulsions d'échantillonnage, de façon à ce que ces dernières coïncident avec le passage de la grandeur de sortie par sa valeur moyenne.

3. Dispositif selon la revendication 1, caractérisé en ce que lesdits moyens (3) comportent des moyens pour générer des créneaux de commande (C') dont seul l'un des fronts, montant ou descendant, a une position fixe et des moyens pour commander la position des impulsions dudit signal d'échantillonnage (H'), de façon à ce que ces impulsions coïncident avec le passage de ladite grandeur de sortie par sa valeur moyenne.

4. Dispositif selon l'une des revendications 1 à 3, caractérisé en ce que, ladite grandeur de sortie étant obtenue dans un système dit du premier ordre, ou d'ordre "n" avec n impair supérieur à 1, lesdits moyens pour générer un signal d'échantillonnage présentant des impulsions dont la position relative, par rapport auxdits créneaux de commande, est déterminée de façon à ce que lesdites impulsions coïncident avec le passage de ladite grandeur de sortie par sa valeur moyenne, consistent en des moyens pour générer un signal d'échantillonnage présentant des impulsions dont la position relative, par rapport auxdits créneaux de commande, est déterminée de façon à ce que lesdites impulsions d'échantillonnage coïncident avec le milieu desdits créneaux de commande.

5. Dispositif selon l'une des revendications 1 à 3, caractérisé en ce que, ladite grandeur de sortie étant obtenue dans un système dit du deuxième ordre, lesdits moyens pour générer un signal d'échantillonnage présentant des impulsions dont la position relative, par rapport auxdits créneaux de commande, est déterminée de façon à ce que lesdites impulsions coïncident avec le passage de ladite grandeur de sortie par sa valeur moyenne, consistent en des moyens pour générer un signal d'échantillonnage présentant des impulsions dont la position relative, par rapport auxdits créneaux de commande, est déterminée de façon à ce que lesdites impulsions d'échantillonnage évoluent en fonction du rapport cyclique selon une loi de variation déterminée.

6. Dispositif selon l'une des revendications 1 à 3, caractérisé en ce que, ladite grandeur de sortie étant obtenue dans un système dit d'ordre "n", avec n pàir supérieur à 2, lesdits moyens pour générer un signal d'échantillonnage présentant des impulsions dont la position relative, par rapport auxdits créneaux de commande, est déterminée de façon à ce que lesdites impulsions coïncident avec le passage de ladite grandeur de sortie par sa valeur moyenne, consistent en des moyens pour générer un signal d'échantillonnage présentant des impulsions dont la position relative, par rapport auxdits créneaux de commande, est déterminée de façon à ce que lesdites impulsions d'échantillonnage soient situées à $\frac{T}{4}$ par rapport au milieu desdits créneaux de commande, où T désigne la période de fonctionnement du hacheur.

7. Dispositif selon l'une des revendications 1 à 6, caractérisé en ce que la fréquence desdites impulsions d'échantillonnage est égale à celle desdits créneaux de commande.

8. Dispositif selon l'une des revendications 1 à 6, caractérisé en ce que la fréquence desdites impulsions d'échantillonnage (H") est double de celle desdits créneaux de commande, et en ce que lesdits moyens pour générer un signal d'échantillonnage présentant des impulsions dont la position relative, par rapport auxdits créneaux de commande, est déterminée de façon à ce que lesdites impulsions coïncident avec le passage de ladite grandeur de sortie par sa valeur moyenne comportent des moyens pour générer un signal d'échantillonnage (H") dont les impulsions ont une position fixe, et des moyens pour commander la position des fronts montants et descendants desdits créneaux de commande (C") par rapport à celle desdites impulsions d'échantillonnage de façon à ce que lesdites impulsions coïncident avec le passage de ladite grandeur de sortie par sa valeur moyenne.

9. Dispositif selon la revendication 8, caractérisé en ce que lesdits moyens de régulation (4) effectuent une régulation à une fréquence double de celle desdits créneaux de commande.

10. Dispositif selon la revendication 9, caractérisé en ce que, lesdits moyens de régulation comportant des moyens de calcul destinés à déterminer la position des fronts montants et descendants desdits créneaux de commande, lesdits moyens de calcul déterminent la position des fronts descendants desdits créneaux de commande pendant l'application au hacheur des fronts montants desdits créneaux de commande, et réciproquement.

11. Dispositif selon la revendication 9, caractérisé en ce que ladite régulation consistant dans le calcul, à une fréquence donnée, dite fréquence de régulation, d'un polynôme dont l'un des termes est fonction de la valeur de ce polynôme pour la période de régulation antérieure à la période de régulation considérée, dont un autre terme est fonction du résultat de mesure obtenu pour l'instant d'échantillonnage correspondant à la période de régulation considérée et dont les autre termes sont fonction de résultats de mesure obtenus à des instants d'échantillonnage précédents, lesdits moyens de régulation comportent des moyens pour calculer d'une part, pour la période de régulation considérée, celui desdits termes qui est fonction du résultat de mesure obtenu pour l'instant d'échantillonnage correspondant à la période de régulation considérée, et d'autre part, de façon anticipée, pour la période de régulation suivante, lesdits autres termes.

**Patentansprüche**

1. Zerhacker-Steuervorrichtung mit:

   - Meßmitteln zum Messen des Mittelwertes einer Ausgangsgröße (S) des Zerhackers (1),

   - Regelungsmitteln (4), die die Erzeugung von Steuer-Tastimpulsen des Zerhackers ausgehend von von den Meßmitteln gelieferten Meßergebnissen und einer Sollgröße (Co) steuern, um den Mittelwert gleich der Sollgröße zu machen,

   - Mitteln (3) zum Erzeugen eines Abtastsignals (H), das Impulse aufweist, deren relative Position so festgelegt ist, daß diese Impulse mit dem Durchgang der Ausgangsgröße durch ihren Mittelwert zusammenfallen,

   dadurch gekennzeichnet, daß:

   - die Meßmittel die Mittel (3) zum Erzeugen des Abtastsignals sowie Mittel (5) zum Abtasten der Ausgangsgröße durch das Abtastsignal (H) aufweisen und daß

   - die Bestimmung der relativen Position der Impulse des Abtastsignals (H) so durchgeführt wird, daß diese Impulse mit der Mitte der Steuer-Abtastimpulse des Zerhackers zusammenfallen.

2. Vorrichtung nach Anspruch 1, dadurch gekennzeichnet, daß die Mittel (3) ein Abtastsignal (H) erzeugen, dessen Impulse eine feste Position haben, und daß sie Mittel zum Steuern der Position der Steuer-Tastimpulse (C) in Bezug auf die der Abtastimpulse derart, daß letztere mit dem Durchgang der Ausgangsgröße durch ihren Mittelwert zusammenfallen, umfaßt.

3. Vorrichtung nach Anspruch 1, dadurch gekennzeichnet, daß die Mittel (3) Mittel zum Erzeugen von Steuer-Tastimpulsen (C'), bei denen nur eine der Flanken, die ansteigende oder die abfallende, eine feste Position hat, und Mittel zum Steuern der Position der Impulse des Abtastsignals (H') derart, daß diese Impulse mit dem Durchgang der Ausgangsgröße durch ihren Mittelwert zusammenfallen, umfaßt.

4. Vorrichtung nach einem der Ansprüche 1 bis 3, dadurch gekennzeichnet, daß wenn die Ausgangsgröße in einem sogenannten System erster Ordnung oder n-ter Ordnung mit ungeradzahligem n>1 erhalten wird, die Mittel zum Erzeugen eines Abtastsignals, das Impulse aufweist, deren relative Position in Bezug auf die Steuer-Tastimpulse derart festgelegt ist, daß die Impulse mit dem Durchgang der Ausgangsgröße durch ihren Mittelwert zusammenfallen, aus Mitteln bestehen zum Erzeugen eines Abtastsignals, das Impulse aufweist, deren relative Position in Bezug auf die Steuer-Tastimpulse derart festgelegt ist, daß die Abtastimpulse mit der Mitte der Steuer-Tastimpulse zusammenfallen.

5. Vorrichtung nach einem der Ansprüche 1 bis 3, dadurch gekennzeichnet, daß wenn die Ausgangsgröße in einem sogenannten System zweiter Ordnung erhalten wird, die Mittel zum Erzeugen eines Abtastsignals, das Impulse aufweist, deren relative Position in Bezug auf die Steuer-Tastimpulse derart festgelegt ist, daß die Impulse mit dem Durchgang der Ausgangsgröße durch ihren Mittelwert zusammenfallen, aus Mitteln bestehen zum Erzeugen eines Abtastsignals, das Impulse aufweist, deren relative Position in Bezug auf die Steuer-Tastimpulse derart festgelegt ist, daß die Abtastimpulse sich in Funktion des Tastverhältnisses nach einer gegebenen Regel ändern.

6. Vorrichtung nach einem der Ansprüche 1 bis 3, dadurch gekennzeichnet, daß wenn die Ausgangsgröße in einem sogenannten System n-ter Ordnung mit geradzahligem n>2 erhalten wird, die Mittel zum Erzeugen eines Abtastsignals, das Impulse aufweist, deren relative Position in Bezug auf die Steuer-Tastimpulse derart festgelegt ist, daß die Impulse mit dem Durchgang der Ausgangsgröße durch ihren Mittelwert zusammenfallen, aus Mitteln bestehen zum Erzeugen eines Abtastsignals, das Impulse aufweist, deren relative Position in Bezug auf die Steuer-Tastimpulse derart festgelegt ist, daß die Abtastimpulse bei T/4 in Bezug auf die Mitte der Steuer-Tastimpulse liegen, wobei T die Funktionsperiode des Zerhackers bezeichnet.

**7.** Vorrichtung nach einem der Ansprüche 1 bis 6, dadurch gekennzeichnet, daß die Frequenz der Abtastimpulse gleich derjenigen der Steuer-Tastimpulse ist.

**8.** Vorrichtung nach einem der Ansprüche 1 bis 6, dadurch gekennzeichnet, daß die Frequenz der Abtastimpulse (H") das doppelte derjenigen der Steuer-Tastimpulse ist, und daß die Mittel zum Erzeugen eines Abtastsignals, das Impulse aufweist, deren relative Position in Bezug auf die Steuer-Tastimpulse derart festgelegt ist, daß die Impulse mit dem Durchgang der Ausgangsgröße durch ihren Mittelwert zusammenfallen, Mittel zum Erzeugen eines Abtastsignals (H"), dessen Impulse eine feste Position haben, und Mittel zum Steuern der Position der ansteigenden und abfallenden Flanken der Steuer-Tastimpulse (C") in Bezug auf diejenige der Abtastimpulse derart, daß diese Impulse mit dem Durchgang der Ausgangsgröße durch ihren Mittelwert zusammenfallen, umfassen.

**9.** Vorrichtung nach Anspruch 8, dadurch gekennzeichnet, daß die Regelungsmittel (4) eine Regelung bei einer Frequenz durchführen, die das Doppelte derjenigen der Steuer-Tastimpulse ist.

**10.** Vorrichtung nach Anspruch 9, dadurch gekennzeichnet, daß die Regelungsmittel Rechenmittel umfassen, die vorgesehen sind, um die Position der ansteigenden und abfallenden Flanken der Steuer-Tastimpulse zu bestimmen, wobei die Rechenmittel die Position der abfallenden Flanken dieser Steuer-Tastimpulse während der Anwendung der ansteigenden Flanken dieser Steuer-Tastimpulse auf den Zerhacker und umgekehrt bestimmen.

**11.** Vorrichtung nach Anspruch 9, dadurch gekennzeichnet, daß die Regelung in der Berechnung, bei einer gegebenen, als Regelungsfrequenz bezeichneten Frequenz, eines Polynoms besteht, von dessen Termen einer Funktion des Wertes dieses Polynoms für die der betrachteten Regelungsperiode vorangehende Regelungsperiode ist, von dem ein anderer Term Funktion des für den der betrachteten Regelungsperiode entsprechenden Abtastzeitpunkt erhaltenen Meßergebnisses ist, und dessen andere Terme Funktion von an vorhergehenden Abtastzeitpunkten erhaltenen Meßergebnissen sind, wobei die Regelungsmittel Mittel umfassen zum Berechnen, einerseits, für die betrachtete Regelungsperiode, desjenigen der Terme, der Funktion des für den der betrachteten Regelungsperiode entsprechenden Abtastzeitpunkt erhaltenen Meßergebnisses ist, und andererseits, vorab, für die folgende Regelungsperiode, der anderen Terme.

**Claims**

**1.** Chopper control apparatus including:

measurement means for measuring the mean value of an output magnitude (S) of said chopper (1);
regulation means (4) which control the supply of control square-waves for the chopper on the basis of measurement results supplied by said measurement means and of a reference magnitude ($C_0$), so as to make said mean value equal to said reference magnitude; and
means (3) for generating a sampling signal (H) having pulses whose relative positions are determined so that said pulses coincide with said output magnitude passing through its mean value; said apparatus being characterized in that: said measurement means include said means (3) for generating said sampling signal and sampling means (5) for sampling said output magnitude by means of said sampling signal (H); and in that
the relative positions of said pluses of said sampling signal (H) are determined so that said pulses coincide with the middle of said control square-waves of said chopper.

**2.** Apparatus according to claim 1, characterized in that said means (3) generate a sampling signal (H) whose pulses have fixed positions, and in that it includes means for controlling the positions of said control square-waves (C) relative to the positions of said sampling pulses, so that the sampling pulses coincide with the output magnitude passing through its mean value.

**3.** Apparatus according to claim 1, characterized in that said means (3) include means for generating control square-waves (C'), each of which has only one of its edges, i.e. its rising edge or its falling edge, in a fixed position, and means for controlling the positions of the pulses of said sampling signal (H'), so that said pulses coincide with the output magnitude passing through its mean value.

**4.** Apparatus according to any one of claims 1 to 3, characterized in that, when said output magnitude is obtained in a "first-order" system or in an "n-order" system, where n is odd and greater than 1, said means for generating a sampling signal having pulses whose positions, relative to said control square-waves, are determined so that said pulses coincide with said output magnitude passing through its mean value consist of means for generating a sampling signal having pulses whose positions, relative to said control square-waves, are determined so that said sampling pulses coincide with the middles of said control square-waves.

5. Apparatus according to any one of claims 1 to 3, characterized in that, when said output magnitude is obtained in a "second-order" system, said means for generating a sampling signal having pulses whose positions, relative to said control square-waves, are determined so that said pulses coincide with said output magnitude passing through its mean value consist of means for generating a sampling signal having pulses whose positions, relative to said control square-waves, are determined so that said sampling pulses vary as a function of the duty ratio in a determined variation relationship.

6. Apparatus according to any one of claims 1 to 3, characterized in that, when said output magnitude is obtained in an "n-order" system, where $n$ is even and greater than 2, said means for generating a sampling signal having pulses whose positions, relative to said control square-waves, are determined so that said pulses coincide with said output magnitude passing through its mean value consist of means for generating a sampling signal having pulses whose positions, relative to said control square-waves, are determined so that said sampling pulses are situated at T/4 relative to the middles of said control square-waves, where T designates the operating period of the chopper.

7. Apparatus according to any one of claims 1 to 6, characterized in that the frequency of said sampling pulses is equal to the frequency of said control square-waves.

8. Apparatus according to any one of claims 1 to 6, characterized in that the frequency of said sampling pulses (H") is twice that of said control square-waves, and in that said means for generating a sampling signal having pulses whose positions, relative to said control square-waves, are determined so that said pulses coincide with said output magnitude passing through its mean value include means for generating a sampling signal (H") whose pulses have fixed positions, and means for controlling the positions of the rising edges and the falling edges of said control square-waves (C") relative to the positions of said sampling pulses, so that the sampling pulses coincide with the output magnitude passing through its mean value.

9. Apparatus according to claim 8, characterized in that said regulation means (4) perform regulation at a frequency that is twice the frequency of said control square-waves.

10. Apparatus according to claim 9, characterized in that, with said regulation means including calculation means for determining the positions of the rising edges and the falling edges of said control square-waves, said calculation means determine the positions of the falling edges of said control square-waves while the rising edges of said control square-waves are being applied to the chopper, and vice versa.

11. Apparatus according to claim 9, characterized in that, with said regulation consisting in calculating a polynomial at a given "regulation" frequency, where one of the terms of the polynomial is a function of the value of the polynomial for the regulation period preceding the regulation period in question, another term of the polynomial is a function of the measurement result obtained for the sampling instant corresponding to the regulation period in question, and the other terms of the polynomial are functions of the measurement results obtained at preceding sampling instants, said regulation means include means for calculating firstly, for the regulation period in question, that one of said terms which is a function of the measurement result obtained for the sampling instant corresponding to the regulation period in question, and secondly, for the following regulation period, said other terms in advance.

# FIG.1

C₀ → [4] → [2] → C → [1] → S

H

[3]

[5]

# FIG.2

H

C

S

T

# FIG.3

H′

C′

S

T

# FIG.4

EP 0 603 051 B1

# FIG.5

11